Europäisches Patentamt

(19) European Patent Office

Office européen des brevets

(11) EP 0 508 640 B1

(12) # EUROPEAN PATENT SPECIFICATION

(45) Date of publication and mention
of the grant of the patent:
**21.02.1996 Bulletin 1996/08**

(51) Int. Cl.⁶: **B60K 28/16**, B60T 8/48,
B60T 8/66

(21) Application number: **92302503.5**

(22) Date of filing: **24.03.1992**

(54) **Wheel spin detection and traction control**

Antriebsschlupfermittlung und -regelung

Détection du patinage de la roue et contrôle de traction

(84) Designated Contracting States:
**DE ES FR GB IT SE**

(30) Priority: **06.04.1991 GB 9107245**

(43) Date of publication of application:
**14.10.1992 Bulletin 1992/42**

(73) Proprietor: **LUCAS INDUSTRIES PUBLIC LIMITED
COMPANY
Solihull, West Midlands B91 3TX (GB)**

(72) Inventors:
• **Glover, Douglas William
Redditch, Worcs. B98 0PS (GB)**

• **Bridgens, Barry John
Quarry Bank, West Midlands DY5 2LW (GB)**
• **Howes, Michael John
Solihull, West Midlands B93 8AR (GB)**
• **Stevens, Simon David
Rowington, Warwickshire CV35 7AB (GB)**

(74) Representative: **Robinson, John Stuart et al
Birmingham, B1 1TT (GB)**

(56) References cited:
**EP-A- 0 405 984          DE-C- 3 741 248
DE-C- 3 938 444**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.9.9/3.4

## Description

The present invention relates to wheel spin detection and traction control.

In order to detect wheel spin of a driven wheel of a vehicle, the speed of the wheel is compared with the vehicle speed, for instance obtained from the speed of one or more undriven wheel or from a speed over ground sensor. If the driven wheel speed exceeds the vehicle speed by more than a predetermined threshold, the wheel is indicated as spinning and remedial action may be taken. For instance, a traction control system responds to detection of excessive wheel spin by reducing engine output so that non-spinning contact between the wheel and the ground can be reestablished or so that wheel spin can be limited to an acceptable or desirable amount. For instance, a small amount of wheel spin may be desirable in order to improve vehicle performance. However, excessive wheel spin causes lateral instability of a vehicle and should therefore be avoided.

Known wheel spin detection and traction control systems, for instance of the type disclosed in US 4 432 430, adopt a constant threshold above vehicle speed for detecting wheel spin. However, such a constant threshold represents a compromise between conflicting requirements. For instance, at relatively low vehicle speeds on low friction surfaces, a relatively low threshold is desirable, for instance to prevent oversteer in low speed manoeuvring. However, in order to avoid false triggering of a traction control system by relatively large bumps and surface unevenness, a relatively large threshold is desirable. Also, at relatively high speeds, wheel speed variations caused by surface unevenness tend to increase so that a higher threshold is desirable.

EP-A-0 405 984 discloses a traction control system of the brake intervention type having two modes of operation. In the first mode, brake intervention operates "collectively" on the driven wheels. In the second mode, brake intervention operates independently on the driven wheels. The collective mode is used when the vehicle is travelling relatively quickly so that vehicle stability is important. The independent mode is used when the vehicle is travelling relatively slowly, for instance to provide independent control of left and right driven wheels which may be rolling on surfaces having different coefficients of friction. In the independent mode, when one of the driven wheels spins, excessive loading may be applied to the engine and this may result in "hunting". In these circumstances, higher wheel velocity thresholds are used so as to avoid reducing the engine output more than necessary.

GB-A-2 246 179 discloses a brake intervention traction controller which has a control threshold formed of a basic threshold plus a correction value based on wheel slip acceleration. The basic threshold has a first portion in which the threshold decreases linearly with vehicle speed. In the example given, the basic threshold decreases from an initial value of 20 kmh$^{-1}$ at zero vehicle speed to about 12 kmh$^{-1}$ at a vehicle speed of 25 kmh$^{-1}$. The threshold then increases again with increasing vehicle speed. The relatively high initial threshold is described as improving the start-up of the vehicle while the decreasing threshold with increasing speed improves control sensitivity. The increase in the threshold with further increases of speed is designed to take account of the relatively high loads that the brakes may be subjected to.

According to the invention, there is provided an apparatus for detecting wheel spin, comprising means for determining the amount of wheel spin of a driven wheel, and a comparator for signalling detection of wheel spin when the amount of wheel spin exceeds the value of wheel spin represented by a first threshold signal, characterised by means for generating the first threshold signal as a first function of vehicle speed having a first value corresponding to a first amount of wheel spin at a first vehicle speed and a second value corresponding to a second amount of wheel spin greater than the first amount at a second vehicle speed greater than the first vehicle speed, the first function being a monotonically increasing function of vehicle speed.

Preferably the function of wheel spin represented by the threshold signal has a constant value for vehicle speeds greater than a first predetermined vehicle speed and less than a second predetermined vehicle speed which is greater than the first predetermined vehicle speed. The function may be continuous and continuously increasing below the first predetermined vehicle speed, for instance increasing linearly. The function may be continuous and continuously increasing above the second predetermined vehicle speed, for instance linearly increasing.

According to an embodiment of the invention, there is provided a traction control system characterised by an apparatus according to the invention and means for reducing drive when wheel spin detected by the apparatus exceeds a second threshold signal. The second threshold signal represents a target spin value and may be a function of vehicle speed, for instance having a constant value below a predetermined vehicle speed and a linearly increasing value above the predetermined vehicle speed.

For a vehicle fitted with a limited slip differential, the function of target value against vehicle speed may be of the type disclosed in EP-A-0 508 643.

It is thus possible to provide a wheel spin detection apparatus, for instance for use in a traction control system, which allows the detection threshold for wheel spin to vary with speed so as to improve detection of genuine wheel spin while being less susceptible to false detection of wheel spin. For relatively low vehicle speeds, a low detection threshold permits early detection of wheel spin, for instance on low friction surfaces. By allowing the threshold detection to increase with speed, susceptibility to false detection of wheel spin as a result of large bumps or other surface irregularities is reduced. For a linear increase of detection threshold with vehicle speed, the gradient or slope of the function may be arranged to be slightly above the amount of wheel spin needed to produce full power acceleration on high friction surfaces, so that traction control intervention is not enabled when it is not required.

For medium vehicle speeds, for instance with higher transmission gears engaged, less drive is supplied to the driven wheels so that wheel spin above the threshold is less likely to occur, and a higher threshold is therefore permissable.

At higher speeds, the sensitivity of detection can be further reduced as a vehicle generally oversteers, even in neutral gear at such speeds, if sharp manoeuvres are attempted. The detection threshold is sufficient to maximise lateral adhesion at all times. However, reduced sensitivity at higher vehicle speeds reduces the susceptibility to false detection caused by wheel speed noise which can occur over a bumpy or uneven road surface.

The invention will be further described, by way of example, with reference to the accompanying drawings, in which:

Figure 1 is a diagram of a vehicle in which a traction control system may be installed;

Figure 2 is a block circuit diagram of a traction control system constituting an embodiment of the invention;

Figure 3 is a graph of wheel spin threshold against vehicle speed; and

Figure 4 is a graph of wheel spin against vehicle speed illustrating target wheel spin.

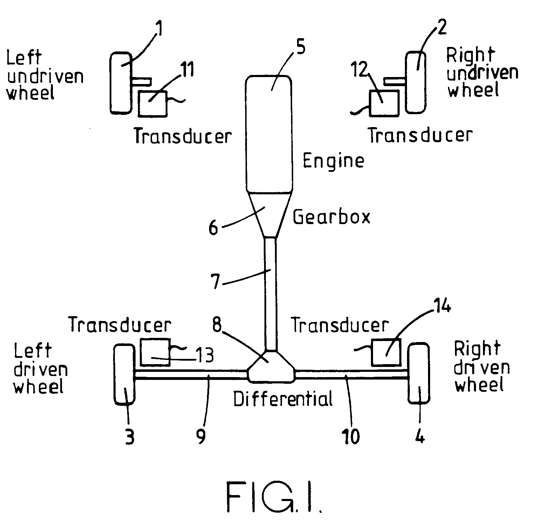

The vehicle illustrated in Figure 1 has undriven left and right front wheels 1 and 2 and driven left and right rear wheels 3 and 4. An internal combustion engine 5 supplies torque through a gearbox 6 and a propeller shaft 7 to a differential 8. The differential 8 is connected to the rear wheels 3 and 4 by means of half shafts 9 and 10, respectively.

The wheels 1 to 4 are provided with wheel speed transducers 11 to 14, respectively. The transducers may, for instance, be of the variable reluctance type in which a fixed variable reluctance sensor cooperates with a wheel so that the frequency of output signals of the sensor is proportional to the road wheel speed. The transducers 11 to 14 may form part of a vehicle anti-lock brake system.

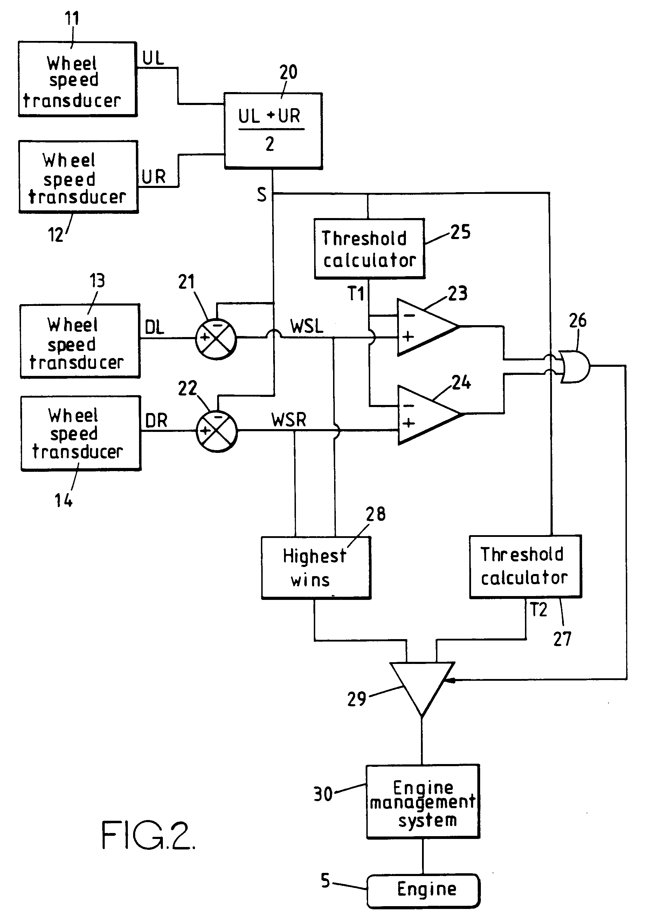

As shown in Figure 2, the wheel speed transducers 11 and 12 for the undriven wheels 1 and 2 supply signals UL and UR which represent the speeds of the respective wheels to a circuit 20 for forming the average S of the undriven wheel speeds. The signal S thus represents the vehicle speed.

The transducers 13 and 14 supply signals DL and DR representing the speeds of the driven wheels to adding inputs of subtractors 21 and 22, respectively. The subtracting inputs of the subtractors 21 and 22 are connected to the output of the circuit 20. The subtractors 21 and 22 thus provide signals WSL and WSR representing the amounts of wheel spin of the left and right driven wheels 3 and 4, respectively.

The wheel spin signals are supplied to non-inverting inputs of comparators 23 and 24, respectively. Inverting inputs of the comparators 23 and 24 are connected to the output of a threshold calculator 25, whose input is connected to the output of the circuit 20. The threshold calculator 25 supplies a threshold signal T1 which is a function of vehicle speed, as will be described hereinafter.

The outputs of the comparators 23 and 24 are connected to the inputs of an OR gate 26. The output of the circuit 20 is connected to a threshold calculator 27 which supplies a second threshold signal T2 as a function of vehicle speed, which function will be described hereinafter.

The wheel slip signals are supplied to a "highest wins" circuit 28. The circuit 28 supplies at its output the one of the wheel spin signals of higher value.

The outputs of the calculator 27 and the circuit 28 are supplied to a comparator 29 which compares the larger of the wheel spin signals with the second threshold signal T2. If the larger wheel spin exceeds the threshold represented by the signal T2, the comparator 29 supplies a signal to an engine management system 30 causing the system 30 to reduce the output demand applied to the engine 5. The output of the OR gate 26 is connected to an enable input of the comparator 29 so as to allow the output demand to be reduced only when either or both of the driven wheels are detected as spinning ie when WSL and/or WSR is greater than T1. Thus, the output of the OR gate 26 controls entry into traction control. However, exit from or completion of traction control is controlled by other means (not shown), for instance upon detection of zero wheel spin for a predetermined time.

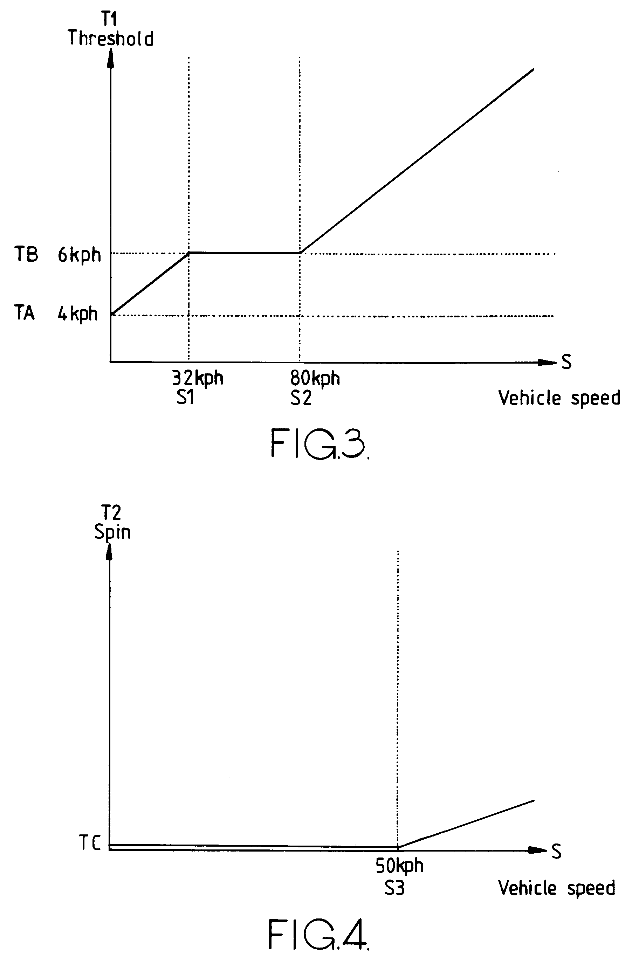

Figure 3 illustrates the operation of the threshold calculator 25 which forms the threshold signal T1 as a function of vehicle speed. In a low speed range below S1 (eg 32 kilometres per hour), the wheel spin detection threshold rises linearly from TA (eg 4 kilometres per hour) for a stationary vehicle to TB (eg 6 kilometres per hour) for a vehicle speed of TB (eg 32 kilometres per hour), in accordance with the expression:

$$T1=TA+((TB-TA)S1)S.$$

where S is the actual speed of the vehicle.

The spin detection threshold stays at the value TB throughout a middle speed range from S1 to S2 (eg 32 to 80 kilometre per hour), above which in a high speed range the spin detection threshold again rises substantially linearly, in accordance with the expression:

$$T1=TB+\alpha(S-S2)$$

where $\alpha$ is the slope of the line subsequent and may have a value, for instance, of 1/16. The linear rise of the threshold signal T1 may continue indefinitely (as shown) or may reach a limit value at a predetermined speed, above which T1 becomes constant.

Figure 4 is a graph illustrating target spin values. The threshold signal T2 has a constant value, for instance 0.5 kilometres per hour, up to a vehicle speed S3, for instance 50 kilometres per hour.

Above S3, the target value increases linearly with the vehicle speed in accordance with:

$$T2=TC+(S-S3)/x$$

where x is a constant, for instance equal to 32 where spin and speed are measured in kilometres per hour.

When either or both of the driven wheels 3 and 4 are spinning i.e. the wheel spin signals exceed the spin threshold T1 illustrated in Figure 3 for the prevailing vehicle speed, the engine management system reduces engine output power until wheel spin falls to or below the target value T2 illustrated in Figure 4 for the prevailing vehicle speed.

It is thus possible to provide an arrangement which more closely meets the conflicting requirements for wheel spin detection thresholds. The detection threshold can have a relatively low value for low vehicle speeds and higher values for intermediate and higher vehicle speeds. Thus, traction control intervention is more likely at relatively low speeds so as to improve vehicle acceleration but intervention is made less likely at higher speeds so as to make the system more immune to variations in wheel speed caused by uneven surfaces.

By allowing the target spin value to vary with vehicle speed, the balance between the conflicting requirements of lateral stability and maximum vehicle acceleration may vary with speed. At higher vehicle speeds, it is acceptable and often desirable to permit increased acceleration at the expense of lateral stability. Such a compromise does not significantly affect the drivability and safety of a vehicle.

## Claims

1.  An apparatus for detecting wheel spin comprising means (20-22) for determining the amount of wheel spin (WSL, WSR) of a driven wheel (3, 4), and a comparator (23, 24) for signaling detection of wheel spin when the amount of wheel spin exceeds the value of wheel spin represented by a first threshold signal (T1), characterised by means (25) for generating the first threshold signal (T1) as a first function of vehicle speed having a first value corresponding to a first amount of wheel spin at a first vehicle speed and a second value corresponding to a second amount of wheel spin greater than the first amount at a second vehicle speed greater than the first vehicle speed, the first function being a monotonically increasing function of vehicle speed.

2.  An apparatus as claimed in Claim 1, characterised in that the first function has a constant value for vehicle speeds greater than a first predetermined vehicle speed (S1) and less than a second predetermined vehicle speed (S2) which is greater than the first predetermined vehicle speed.

3.  An apparatus as claimed in Claim 2, characterised in that the first function is continuous and continuously increases with increasing vehicle speed below the first predetermined vehicle speed (S1).

4.  An apparatus as claimed in Claim 3, characterised in that the first function increases linearly below the first predetermined vehicle speed (S1).

5.  An apparatus as claimed in any one of Claims 2 to 4, characterised in that the first function continuously increases with increasing vehicle speed above the second predetermined vehicle speed (S2).

6.  An apparatus as claimed in Claim 5, characterised in that the first function increases linearly above the second predetermined vehicle speed (S2).

7.  A traction control system characterised by an apparatus as claimed in any one of the preceding claims and means (30) for reducing drive when wheel spin detected by the apparatus exceeds a second threshold signal (T2).

8.  A traction control system as claimed in Claim 7, characterised in that the second threshold signal (T2) is a second function of vehicle speed.

9.  A traction control system as claimed in Claim 8, characterised in that the second threshold signal (T2) has a constant value below a third predetermined vehicle speed (S3) and a linearly increasing value above the third predetermined vehicle speed (S3).

## Patentansprüche

1.  Vorrichtung zum Ermitteln des Antriebsschlupfes, umfassend Mittel (20-22) zum Ermitteln des Ausmaßes an Antriebsschlupf (WSL, WSR) eines angetriebenen Rades (3, 4) und einen Komparator (23, 24) zum Melden der Ermittlung eines Antriebsschlupfes, wenn das Ausmaß an Antriebsschlupf jenen Antriebsschlupfwert übersteigt, der durch ein erstes Schwellensignal (T1) dargestellt wird, gekennzeichnet durch Mittel (25) zum Erzeugen des ersten Schwellensignals (T1) als eine erste Funktion der Fahrzeuggeschwindigkeit, die einen ersten Wert aufweist, welcher einem ersten Ausmaß an Antriebsschlupf bei einer ersten Fahrzeuggeschwindigkeit entspricht, sowie einen zweiten Wert, welcher einem zweiten Ausmaß an Antriebsschlupf, welches größer als das erste Ausmaß ist, bei einer zweiten Fahrzeuggeschwindigkeit, welche größer als die erste Fahrzeuggeschwindigkeit ist, entspricht, wobei die erste Funktion eine monoton wachsende Funktion der Fahrzeuggeschwindigkeit ist.

2. Vorrichtung nach Anspruch 1, dadurch gekennzeichnet, daß die erste Funktion für Fahrzeuggeschwindigkeiten, die größer als eine vorgegebene Fahrzeuggeschwindigkeit (S1) und kleiner als eine zweite vorgegebene Fahrzeuggeschwindigkeit (S2) sind, welche großer als die erste vorgegebene Fahrzeuggeschwindigkeit ist, einen konstanten Wert aufweist.

3. Vorrichtung nach Anspruch 2, dadurch gekennzeichnet, daß die erste Funktion stetig ist und unter der ersten vorgegebenen Fahrzeuggeschwindigkeit (S1) mit zunehmender Fahrzeuggeschwindigkeit stetig ansteigt.

4. Vorrichtung nach Anspruch 3, dadurch gekennzeichnet, daß die erste Funktion unter der ersten vorgegebenen Fahrzeuggeschwindigkeit (S1) linear ansteigt.

5. Vorrichtung nach einem der Ansprüche 2 bis 4, dadurch gekennzeichnet, daß die erste Funktion über der zweiten vorgegebenen Fahrzeuggeschwindigkeit (S2) mit zunehmender Fahrzeuggeschwindigkeit stetig ansteigt.

6. Vorrichtung nach Anspruch 5, dadurch gekennzeichnet, daß die erste Funktion über der zweiten vorgegebenen Fahrzeuggeschwindigkeit (S2) linear ansteigt.

7. Antriebsschlupfregelungsystem, gekennzeichnet durch eine Vorrichtung nach einem der vorangehenden Ansprüche und durch Mittel (30) zur Reduktion des Antriebs, wenn der von der Vorrichtung ermittelte Antriebsschlupf ein zweites Schwellensignal (T2) überschreitet.

8. Antriebsschlupfregelungsystem nach Anspruch 7, dadurch gekennzeichnet, daß das zweite Schwellensignal (T2) eine zweite Funktion der Fahrzeuggeschwindigkeit ist.

9. Antriebsschlupfregelungsystem nach Anspruch 8, dadurch gekennzeichnet, daß das zweite Schwellensignal (T2) unter einer dritten vorgegebenen Fahrzeuggeschwindigkeit (S3) einen konstanten Wert und über der dritten vorgegebenen Fahrzeuggeschwindigkeit (S3) einen linear ansteigenden Wert aufweist.

## Revendications

1. Appareil pour détecter le patinage des roues comprenant un moyen (20-22) pour déterminer la valeur du patinage des roues (WSL, WSR) d'une roue motrice (3, 4) et un comparateur (23, 24) pour signaler la détection du patinage des roues lorsque la valeur du patinage des roues dépasse la valeur du patinage des roues représentée par un premier signal de seuil (T1), caractérisé par un moyen (25) pour émettre le premier signal de seuil (T1) comme une première fonction de la vitesse du véhicule, ayant une première valeur correspondant à une première valeur du patinage des roues en présence d'une première vitesse du véhicule, et une deuxième valeur correspondant à une deuxième valeur du patinage des roues, supérieure à la première valeur en présence d'une deuxième vitesse du véhicule supérieure à la première vitesse du véhicule, la première fonction étant une fonction à accroissement uniforme en fonction de la vitesse du véhicule.

2. Appareil selon la revendication 1, caractérisé en ce que la première fonction a une valeur constante pour des vitesses du véhicule supérieures à une première vitesse prédéterminée du véhicule (S1) et inférieure à une deuxième vitesse prédéterminée du véhicule (S2), supérieure à la première vitesse prédéterminée du véhicule.

3. Appareil selon la revendication 2, caractérisé en ce que la première fonction est continue et s'accroît de façon continue en fonction de la vitesse croissante du véhicule au-dessous de la première vitesse prédéterminée du véhicule (S1).

4. Appareil selon la revendication 3, caractérisé en ce que la première fonction s'accroît linéairement au-dessous de la première vitesse prédéterminée du véhicule (S1).

5. Appareil selon l'une quelconque des revendications 2 à 4, caractérisé en ce que la première fonction s'accroît de façon continue en fonction de la vitesse croissante du véhicule au-dessus de la deuxième vitesse prédéterminée du véhicule (S2).

6. Appareil selon la revendication 5, caractérisé en ce que la première fonction s'accroît linéairement au-dessus de la deuxième vitesse prédéterminée du véhicule (S2).

7. Système de commande de la traction caractérisé par un appareil selon l'une quelconque des revendications précédentes et un moyen (30) pour réduire l'entraînement lorsque le patinage des roues détecté par l'appareil dépasse un deuxième signal de seuil (T2).

8. Système de commande de la traction selon la revendication 7, caractérisé en ce que le deuxième signal de seuil (T2) est une deuxième fonction de la vitesse du véhicule.

9. Système de commande de la traction selon la revendication 8, caractérisé en ce que le deuxième signal de seuil (T2) a une valeur constante au-dessous d'une troisième vitesse prédéterminée du véhicule (S3) et une valeur à accroissement linéaire au-dessus de la troisième vitesse prédéterminée du véhicule (S3).

FIG.I.

FIG.2.

FIG.3.

FIG.4.